# EUROPEAN PATENT APPLICATION

(11) **EP 4 653 257 A1**
(43) Date of publication of application: **26.11.2025**
(21) Application number: 25165605.4
(22) Date of filing: 24.03.2025
(51) Int. Cl.: B60P 3/075, B60P 7/08

(54) **FORCE DISTRIBUTOR DEVICE FOR ANCHORING VEHICLES ON CAR TRANSPORTERS**

(30) Priority: 24.05.2024 IT 202400011806
(71) Applicant: Rolfo S.p.A., 12042 Bra (CN) (IT)
(72) Inventor: Rolfo, Giorgio, 12042 Bra (IT); Morino, Ivan, 12042 Bra (IT)
(74) Representative: Garavelli, Paolo

(57) **Abstract**

A force distribution device (9) is described for anchoring vehicles on car transporters, comprising: a central support body (11); at least one slot (13) located at the centre of the support body (11) and designed to be hooked to at least one hook (3) of a strap (1) for anchoring a wheel (3) of a vehicle; and one or more distribution hooks (15) each located at one end of the support body (11) and designed to be inserted inside holes (8) made in a lane (6) for sliding and supporting the wheels (7) of the vehicle.

## Description

The present invention relates to a force distribution device for anchoring vehicles on car transporters.

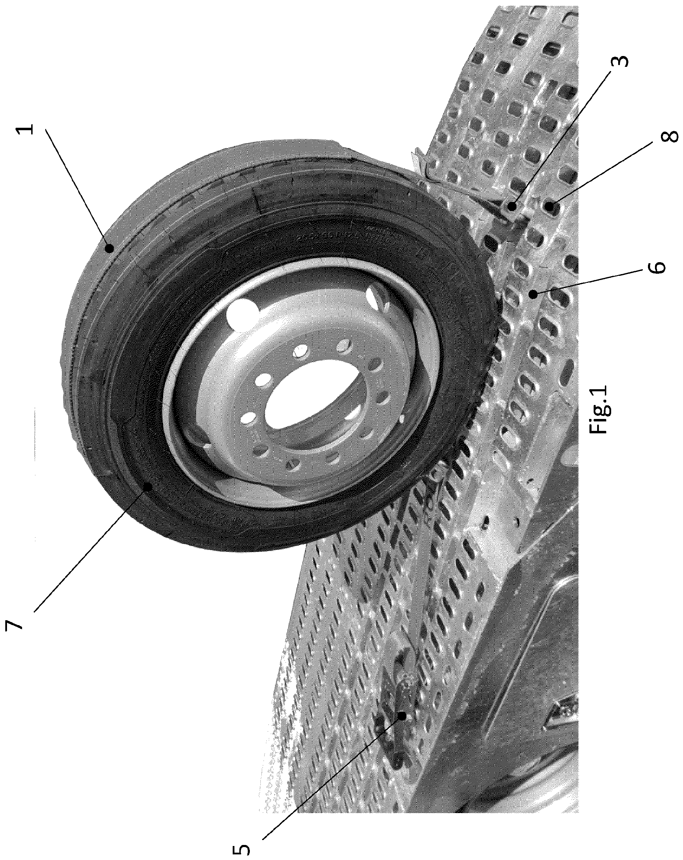

As illustrated in Fig. 1, the anchoring of vehicles on car transporters is carried out by means of a strap 1 equipped with hooks 3 and a ratchet tensioner 5 which wraps around the wheel 7 of the vehicle to be transported and is anchored inside oval holes 8 made in the sheet metal of a support lane 6 below.

Regulatory developments require that oval hole sheets be certified by testing the anchor points, imposing increasingly stringent requirements.

Vehicles in circulation must still comply with the new standards, but the holes in the sheet metal deform in an unacceptable way.

Documents EP-A1-1 072 468, EP-A1-3 636 489 and EP-A1-3 587 178 describe devices with a single bent gripping end, which do not distribute the tensile force uniformly across the slots in the loading platform; document EP-A1-3 269 592 describes a device which distributes the tensile force only across adjacent slots.

Object of the present invention is solving the above-mentioned prior art problems by providing a distribution device for anchoring vehicles on car transporters which is placed between the traditional hook of the strap and the holes in the sheet metal, such distribution device having a profile such as to distribute the force over a greater surface area of a hole or two holes at the same time, but in which the holes are not necessarily adjacent.

Unlike the classic hook with a round section that rests on a single hole in a punctual or almost punctual manner, the distributor device of the present invention gives rise to one or more linear type contacts on the holes.

The above and other objects and advantages of the invention, as will result from the following description, are achieved with a distribution device for anchoring vehicles on car transporters such as that described in the main claims.

It is understood that all attached claims form an integral part of this description.

It will be immediately obvious that countless variations and modifications can be made to what is described (for example relating to shape, dimensions, arrangements and parts with equivalent functionality) without departing from the scope of the invention as appears from the attached claims.

The present invention will be better described by a preferred embodiment, provided by way of example and not limitation, with reference to the attached drawings, in which:
Fig. 1 shows a perspective view of a detail of the wheel anchoring of a vehicle on a car transporter according to the prior art;

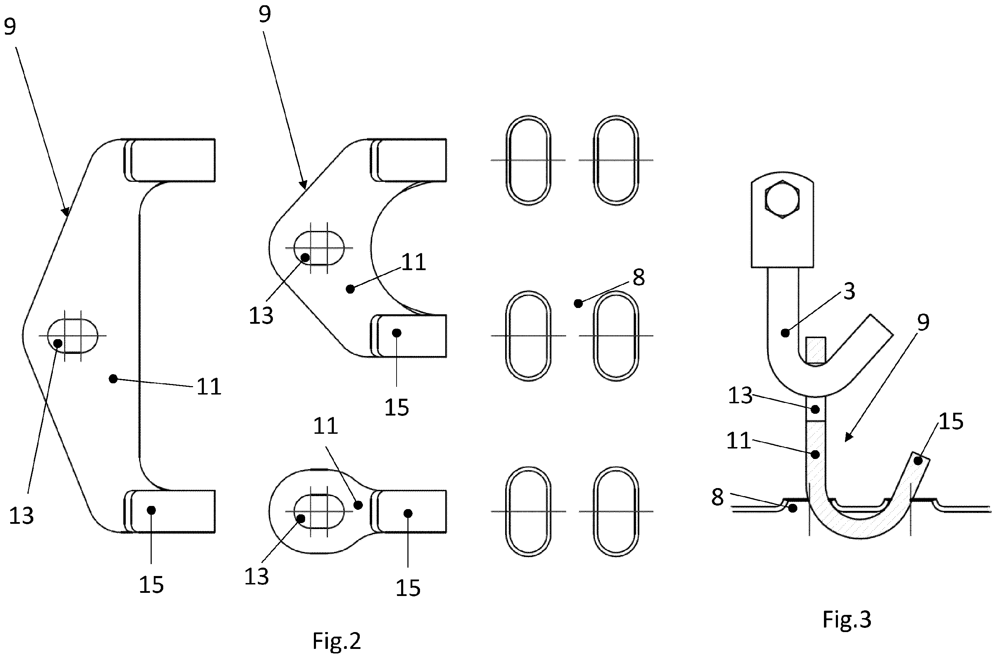

Fig. 2 shows top views of three versions of the dispenser device and the oval attachment holes on a car transporter;
Fig. 3 shows a side view of the dispenser device connected to a standard anchor hook;
Figs. 4 to 6 show respectively a front view, a side view and a perspective view of an embodiment of the dispensing device of the present invention in a p53 sheet metal and narrow version;
Figs. 7 to 9 show respectively a front view, a side view and a perspective view of an embodiment of the dispensing device of the present invention in a p53 sheet metal and wide version;
Figs. 10 to 12 show respectively a front view, a side view and a perspective view of an embodiment of the dispensing device of the present invention in a p70 sheet metal and narrow version; and
Fig. 13 to 15 show respectively a front view, a side view and a perspective view of an embodiment of the dispensing device of the present invention in a p70 sheet metal and wide version.

Referring to the Figures, the distributor device 9 for anchoring vehicles on car transporters comprises:
- a central support body 11;
- at least one slot 13 located at the centre of the support body 11 and designed to be hooked to at least one hook 3 of a strap 1 for anchoring a wheel 7 of a vehicle; and
- one or more distributing hooks 15 each placed at one end of the support body 11 and designed to fit inside holes 8, preferably oval, obtained in a lane 6 for sliding and supporting the wheels 7 of the vehicle.

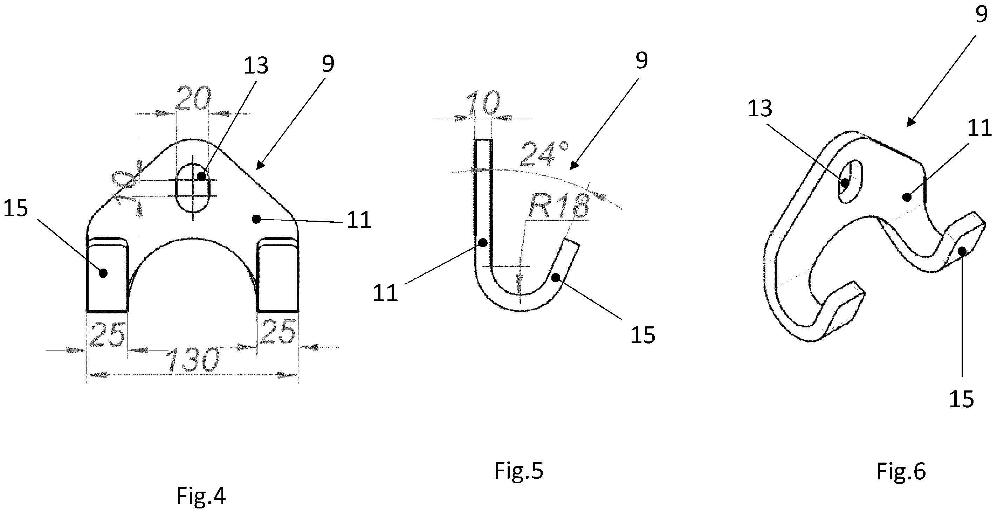

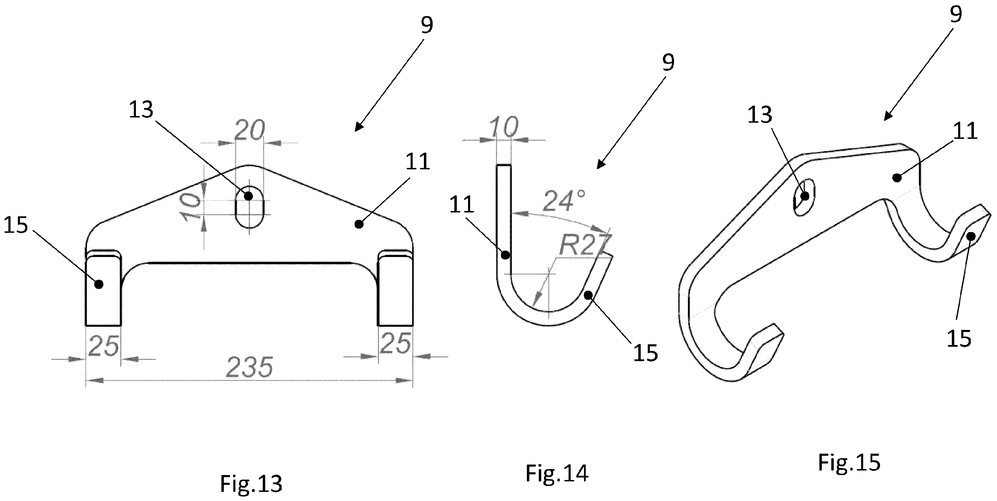

It is possible to apply the same principle to perforated sheets with different interaxis spacings between the holes 8, by making the distributor device 9 with a correct bending radius of the hooks, for example a radius of 18 mm is suitable for sheets with interaxis of 53 mm and a radius of 27 mm for sheets with interaxis of 70 mm; Figs. 4 to 15 illustrate some possible construction variations of the distributor device 9 of the present invention, with the relative preferred measurements of the body 11, slot 13 and distributor hooks 15.

In particular, in Figs. 4 to 6 which show the p53 sheet metal distributor device 9 in the narrow version, the support body 11 is 130 mm wide, the slot 13 is 20 mm wide and 10 mm high in the straight parts, the distributor hooks 15 are 25 mm wide and the angle of the distributor hooks 15 themselves, with R18, is equal to 24°.

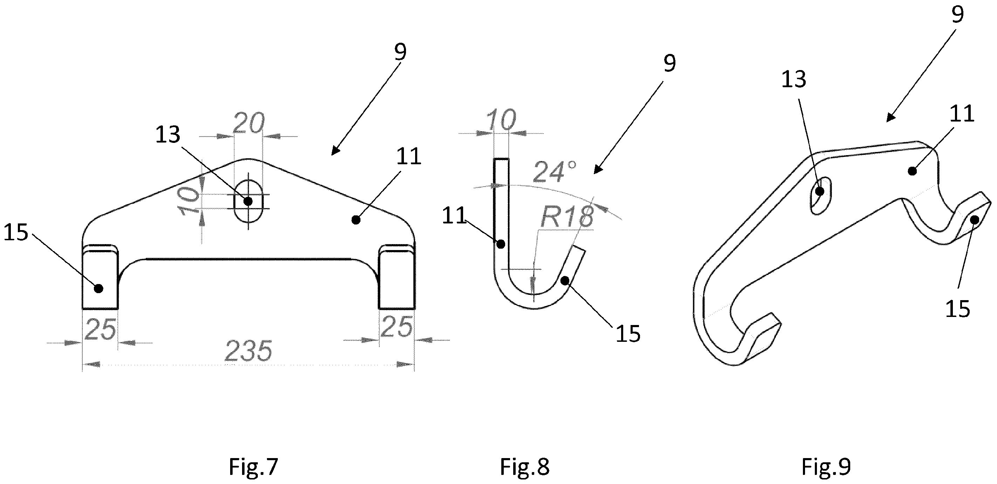

In Figs. 7 to 9, which show the wide version of the p53 sheet metal distributor device 9, the support body 11 is 235 mm wide, the slot 13 is 20 mm wide and 10 mm high in the straight parts, the distributor hooks 15 are 25 mm wide and the angle of the distributor hooks 15 themselves, with R18, is equal to 24°.

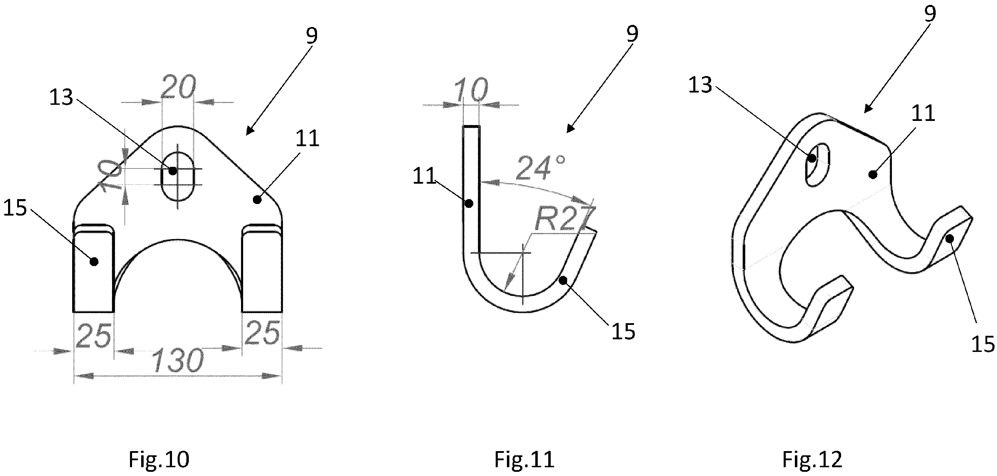

In Figs. 10 to 12, which show the p70 sheet metal distributor device 9 in the narrow version, the support body 11 is 130 mm wide, the slot 13 is 20 mm wide and 10 mm high in the straight parts, the distributor hooks 15 are 25 mm wide and the angle of the distributor hooks 15 themselves, with R27, is equal to 24°.

And in Figs. 10 to 12 which show the p70 sheet metal distributor device 9 in the wide version, the support body 11 is 235 mm wide, the slot 13 is 20 mm wide and 10 mm high in the straight parts, the distributor hooks 15 are 25 mm wide and the angle of the distributor hooks 15 themselves, with R27, is equal to 24°.

Tests were successfully conducted in accordance with the German directive "VDI 2700 sheet 8" by applying the loads indicated in the following table in the three expected positions:

| **Angle of application of force** | **Applied force** |
|---|---|
| 90° | 1400 daN |
| 45° | 1500 daN |
| 0° | 1500 daN |

## Claims

1. Force distribution device (9) for anchoring vehicles on car transporters, comprising:
- a central support body (11);
- at least one slot (13) located at the centre of the support body (11) and designed to be hooked to at least one hook (3) of a strap (1) for anchoring a wheel (3) of a vehicle; and
- one or more distributing hooks (15) each placed at one end of the support body (11) and designed to fit inside holes (8) made in a lane (6) for sliding and supporting the wheels (7) of the vehicle ,
wherein:
- the distributor device (9) has a profile such as to distribute the force over a larger surface area of a hole (8), the profile being such as to distribute the force simultaneously on two holes (8), said holes (8) being non-adjacent to each other;
- the distributor device (9) has a hook bending radius of 18 mm, R18, which adapts to sheets with a 53 mm centre distance; and
- the distributor device (9) is made, for a p53 sheet metal in a narrow version, with the support body (11) 130 mm wide, the slot (13) 20 mm wide and 10 mm high in the straight parts, the distributor hooks (15) 25 mm wide and the angle of the distributor hooks (15), with R18, equal to 24°.

2. Force distribution device (9) for anchoring vehicles on car transporters, comprising:
- a central support body (11);
- at least one slot (13) located at the centre of the support body (11) and designed to be hooked to at least one hook (3) of a strap (1) for anchoring a wheel (3) of a vehicle; and
- one or more distributing hooks (15) each placed at one end of the support body (11) and designed to fit inside holes (8) made in a lane (6) for sliding and supporting the wheels (7) of the vehicle,
wherein:
- the distributor device (9) has a profile such as to distribute the force over a larger surface area of a hole (8), the profile being such as to distribute the force simultaneously on two holes (8), said holes (8) being non-adjacent to each other;
- the distributor device (9) has a hook bending radius of 18 mm, R18, which adapts to sheets with a 53 mm centre distance; and
- the distributor device (9) is made, for a p53 sheet metal in wide version, with the support body (11) 235 mm wide, the slot (13) 20 mm wide and 10 mm high in the straight parts, the distributor hooks (15) 25 mm wide and the angle of the distributor hooks (15), with R18, equal to 24°.

3. Force distribution device (9) for anchoring vehicles on car transporters, comprising:
- a central support body (11);
- at least one slot (13) located at the centre of the support body (11) and designed to be hooked to at least one hook (3) of a strap (1) for anchoring a wheel (3) of a vehicle; and
- one or more distributing hooks (15) each placed at one end of the support body (11) and designed to fit inside holes (8) made in a lane (6) for sliding and supporting the wheels (7) of the vehicle,
wherein:
- the distributor device (9) has a profile such as to distribute the force over a larger surface area of a hole (8), the profile being such as to distribute the force simultaneously on two holes (8), said holes (8) being non-adjacent to each other;
- the distributor device (9) has a hook bending radius of 27 mm, R27, which is suitable for sheets with a 70 mm centre distance; and
- the distributor device (9) is made, for a p70 sheet metal in a narrow version, with the support body (11) 130 mm wide, the slot (13) 20 mm wide and 10 mm high in the straight parts, the distributor hooks (15) 25 mm wide and the angle of the distributor hooks (15), with R27, equal to 24°.

4. Force distribution device (9) for anchoring vehicles on car transporters, comprising:
- a central support body (11);
- at least one slot (13) located at the centre of the support body (11) and designed to be hooked to at least one hook (3) of a strap (1) for anchoring a wheel (3) of a vehicle; and
- one or more distributing hooks (15) each placed at one end of the support body (11) and designed to fit inside holes (8) made in a lane (6) for sliding and supporting the wheels (7) of the vehicle,
wherein:
- the distributor device (9) has a profile such as to distribute the force over a larger surface area of a hole (8), the profile being such as to distribute the force simultaneously on two holes (8), said holes (8) being non-adjacent to each other;
- the distributor device (9) has a hook bending radius of 27 mm, R27, which is suitable for sheets with a 70 mm centre distance; and
- the distributor device (9) is made, for a p70 sheet metal in wide version, with the support body (11) 235 mm wide, the slot (13) 20 mm wide and 10 mm high in the straight parts, the distributor hooks (15) 25 mm wide and the angle of the distributor hooks (15), with R27, equal to 24°.
